(19) Europäisches Patentamt

European Patent Office

Office européen des brevets

(11) EP 1 078 844 B1

(12) **EUROPEAN PATENT SPECIFICATION**

(45) Date of publication and mention
of the grant of the patent:
**12.04.2006 Bulletin 2006/15**

(51) Int Cl.:
*B62D 17/00* *(2006.01)*     *B60G 21/00* *(2006.01)*
*B62D 7/04* *(2006.01)*     *B62D 9/02* *(2006.01)*
*B60G 17/015* *(2006.01)*

(21) Application number: **00117647.8**

(22) Date of filing: **16.08.2000**

(54) **Vehicle steering apparatus**

Fahrzeuglenkung

Dispositif de direction pour véhicule

(84) Designated Contracting States:
**DE FR GB**

(30) Priority: **23.08.1999 JP 23585899**
**10.08.2000 JP 2000242284**

(43) Date of publication of application:
**28.02.2001 Bulletin 2001/09**

(73) Proprietor: **Koyo Seiko Co., Ltd.**
**Chuo-ku**
**Osaka 542-8502 (JP)**

(72) Inventors:
• **Hayama, Ryouhei,**
**c/o Koyo Seiko Co. , Ltd.**
**Osaka 542-8502 (JP)**
• **Nakano, Shiro,**
**c/o Koyo Seiko Co. , Ltd.**
**Osaka 542-8502 (JP)**

(74) Representative: **Hering, Hartmut**
**Patentanwälte**
**Berendt, Leyh & Hering**
**Innere Wiener Strasse 20**
**81667 München (DE)**

EP 1 078 844 B1

**Description**

This invention relates to a vehicle steering apparatus wherein the steering angle is altered by actuators driven in response to steering inputs resulting from a manual operating member such as a steering wheel and to steering inputs from an automatic steering apparatus.

In a vehicle that is steered without mechanically linking a steering wheel to the wheels, for example, the steering angle is changed by altering the toeing angles of the wheels by an actuator driven in response to the steering wheel turning angle.

However, when the change in the steering angle becomes large, the amount of actuator movement required to change the vehicle toeing angles also becomes large. For that reason the steering angle change responsiveness to steering inputs declines, and improvements in steering characteristics are limited.

DE 37 36 226 A, which is considered as being the most relevant prior art document, discloses an independent suspension for a steered wheel, which is designed so that enhanced compliance is achieved from analysis of information containing driving and road conditions. According to DE 37 36 226 A, a control device controls camber angle changing actuators for the left wheel and the right wheel, respectively, in response to a steering input. Movements of camber angle changing actuators for the left wheel and the right wheel, respectively, cause camber angle mechanisms for the left wheel and the right wheel, respectively, to change the camber angles of the left wheel and the right wheel, respectively, from straight ahead travel values. The vehicle is steered in response to amount of change in camber angles of the left wheel and the right wheel, respectively, from straight ahead travel values, wherein the left wheel camber angle and the right wheel camber angle may be caused to be mutually different.

GB-A-2 279 047 discloses a vehicular suspension comprising means for changing at least camber angles of left and right wheels from straight ahead travel values in response to a steering input, wherein a vehicle is steered by causing amount of change in left wheel camber angle from straight ahead travel value and amount of change in right wheel camber angle from straight ahead travel value to be mutually different, according to amounts of change in said camber angles.

Starting from the disclosure of DE 37 36 226 A, it is the object of the present invention to provide a vehicle steering apparatus by which steering characteristics can be improved.

This object is solved by a vehicle steering apparatus as defined in independent claim 1. The dependent claims show advantageous further developments of the vehicle steering apparatus of claim 1.

Especially, the above object is achieved by providing an axle shaft being linked to a vehicle body so as to be turnable about a vertically orientated axis, wherein the left wheel is linked to one end of said axle shaft and said right wheel is linked to another end thereof; an axle shaft turning angle changing actuator; an axle shaft turning angle changing mechanism for changing axle shaft turning angle in response to movements of said axle shaft turning angle changing actuator; a toeing angle changing actuator for said left and right wheels; a toeing angle changing mechanism for changing toeing angles of said left and right wheels in response to movements of said toeing angle changing actuator; and by controlling, in addition to the camber angle actuators, said axle shaft turning angle changing actuator and said toeing angle changing actuator in response to the steering input by the control means; wherein said vehicle is steered in response to, in addition to the amount of change in camber angle of said left wheel and to the amount of change in camber angle of said right wheel, amounts of change in said axle shaft turning angle from straight ahead travel value and amounts of change in said toeing angles from straight ahead travel values.

Because the vehicle is, according to the present invention, steered not only by changing camber angles of the left and right wheels from the straight ahead travel values, but also by changing the axle shaft turning angle and toeing angle from the straight ahead travel values by steering inputs, the discrepancy between the center of vehicle turning during a steering operation and the center of turning of the left and right wheels can be made small, and slipping of the left and right wheels caused by the discrepancy is reduced, steering resistance can be reduced.

In the present invention, it is preferable that means for detecting displacements in the wheels associated with road surface irregularities be provided, that the camber angle changing actuators be controlled so that the camber angles change in response to the displacements in the wheels, and that at least one or other of the axle shaft turning angle changing actuator and the toeing angle changing actuator be controlled so that steering angle fluctuations resulting from camber angle changes in response to the displacements in the wheels are compensated for.

By these means, the wheels can be displaced rapidly in response to road surface irregularities, and the suspension functions can be enhanced.

In the present invention, it is preferable that means for causing a force to act on the vehicle body in a direction opposite to the direction of roll force acting on the vehicle body during steering angle changes be provided.

By these means, the force acting on the vehicle body in the roll direction due to centrifugal force during steering angle changes can be cancelled out, erratic vehicle behavior can be prevented, and driving stability can be enhanced.

It is preferable in the wheels of the vehicle steered as described above that the radius of curvature at the middle area of tire tread be wider than at the opposite ends thereof. Thereby, stable gripping force is obtained and driving stability can be prevented from declining.

According to the present invention, a vehicle steering apparatus is provided which enhances steering characteristics, reduces steering resistance, enhances suspension performance, and can enhance driving stability.

BRIEF DESCRIPTION OF THE DRAWINGS

Fig. 1 is back view for describing the configuration of a steering apparatus in an embodiment of the present invention;

Fig. 2 is a plan for describing the configuration of a steering apparatus in an embodiment of the present invention;

Fig. 3 is a diagram for describing the operation of a steering apparatus in an embodiment of the present invention when the axel shaft turning angle is changed;

Fig. 4 (1) is a diagram for describing the condition when the wheel camber angle is being changed in a steering apparatus in an embodiment of the present invention, while Fig. 4 (2) is a diagram representing the turning track of that wheel;

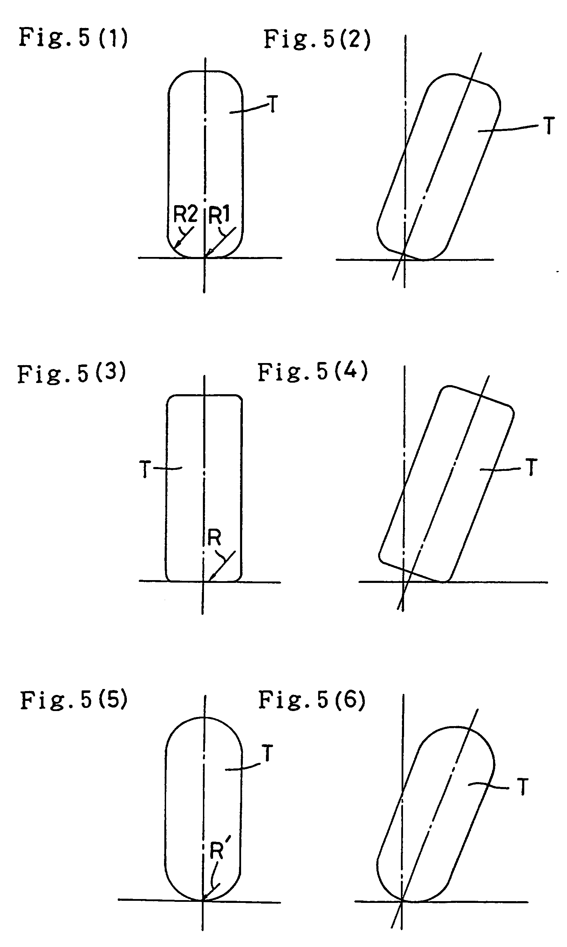

Fig. 5 (1) is a front elevation of a tire suitable for wheels provided with the steering apparatus of an embodiment of the present invention, Fig. 5 (2) is a front elevation of that tire when the camber angle thereof is changed, Fig. 5 (3) is a front elevation of a conventional tire for a four wheel vehicle, Fig. 5 (4) is a front elevation of a conventional tire for a four wheel vehicle when the camber angle thereof is changed, Fig. 5 (5) is a front elevation of a conventional tire for a two wheel vehicle, and Fig. 5 (6) is a front elevation of a conventional tire for a two wheel vehicle when the camber angle thereof is changed; and

Fig. 6 is a flow chart of control procedures for the steering apparatus in an embodiment aspect of the present invention.

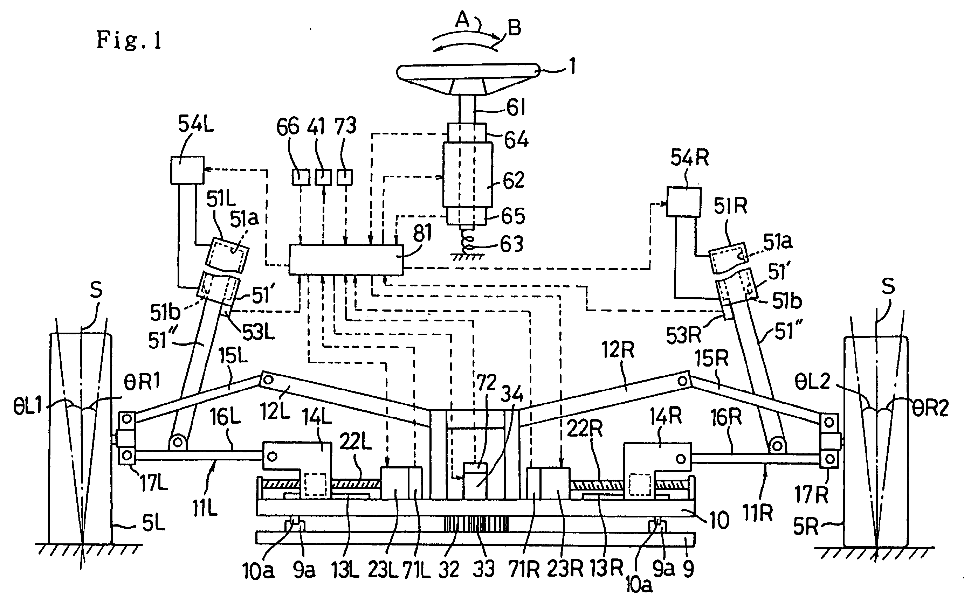

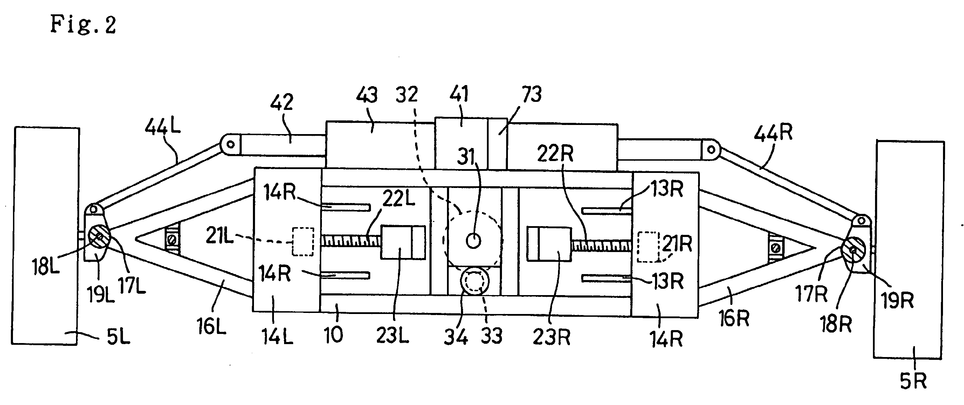

In the vehicle steering apparatus diagrammed in Fig. 1 and Fig. 2, the movements of actuators 23L, 23R, 34, and 41 driven in response to turning operation of a steering wheel 1 that is a manual operating member are transmitted to the front left and front right wheels 5L and 5R, and thereby the steering angle is changed. Thus the steering angle can be altered without mechanically linking the steering wheel 1 to the wheels 5L and 5R.

This steering apparatus has an axle shaft 10 that is attached to the vehicle body. This axle shaft 10 is supported by a base 9, which is linked to the vehicle body through springs (not shown) constituting a suspension system, so that it can turn about an axis oriented vertically via a support shaft 31. This center of turning is positioned in the middle of the vehicle body in the width dimension thereof and in the middle between the opposite ends of the axle shaft 10. A ring gear 32 that surrounds the support shaft 31 is attached to the base 9. A pinion gear 33 that meshes with that ring gear 32 is driven by an axle shaft turning angle changing actuator 34 that is attached to the axle shaft 10. The actuator 34 can be constituted by an electric motor such as a brushless motor, for example. The turning of the pinion gear 33 in response to movements of the actuator 34 is transmitted to the ring gear 32, and thereby the turning angle of the axle shaft 10 about the vertically oriented axis is changed. That is, an axle shaft turning angle changing mechanism for changing the turning angle of the axle shaft 10 according to the movements of the actuator 34 is constituted by the support shaft 31, ring gear 32, and pinion gear 33. Turning guides 9a are provided in the base 9, and guided parts 10a that are guided by these turning guides 9a are provided in the axle shaft 10.

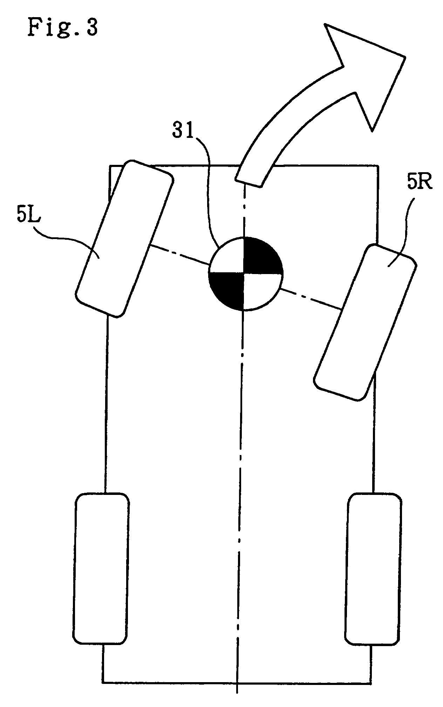

The steering angle of the vehicle is altered by changes in the turning angle of the axle shaft 10 from the straight ahead travel value, and, as diagrammed in Fig. 3, for example, the vehicle turns in the direction of the arrow in the diagram when the axle shaft 10 turns about the support shaft 31 and the left wheel 5L is positioned forward of the right wheel 5R.

An axle shaft turning angle sensor 72 is provided for detecting the turning amount of the actuator 34 as a value corresponding to the amount of change in the turning angle of the axle shaft 10 from the straight ahead travel value.

The left wheel 5L is linked through a left linking mechanism 11L to one end of the axle shaft 10, and the right wheel 5R is linked through a right linking mechanism 11R to the other end thereof. Each of the linking mechanisms 11L and 11R has upper support arm 12L, 12R fixed to the axle shaft 10, lower support arm 14L, 14R attached movably to the axle shaft 10 via guide rails 13L, 13R, upper linking member 15L, 15R, one of the ends of which is linked to the upper arm 12L, 12R via a ball joint so as to be swingable, lower linking member 16L, 16R, one of the ends of which is linked to the lower support arm 14L, 14R via a ball joint so as to be swingable, and swinging arm 17L, 17R linked to the other end of the upper linking member 15L, 15R and to the other end of the lower support arm 14L, 14R via ball joints so as to swingable. The left wheel 5L is linked to the left linking mechanism 11L through knuckle arm 19L that is linked rotatably to the swinging arm 17L through a king pin 18L. The right wheel 5R is linked to the right linking mechanism 11R through knuckle arm 19R that is linked rotatably to the swinging arm 17R through a king pin 18R.

The directions of movement of the lower support arms 14L and 14R relative to the axle shaft 10 are determined so that they are in the left and right directions when the vehicle is traveling straight ahead. Ball screws 22L and 22R, each of which screws into ball nut 21L, 21R attached to the lower support arm 14L, 14R, are supported by the axle shaft 10. The screw 22L is driven rotatably by the camber angle changing actuator 23L for the left wheel 5L, attached to the axle shaft 10. The ball screw 22R is driven rotatably by the camber angle changing actuator 23R for the right wheel 5R, attached to the axle shaft 10. Each of these camber changing actuators 23L and 23R is constituted by an electric motor such as a brushless motor, for example.

When the ball screw 22L turns in response to the movement of camber angle changing actuator 23L for the left wheel 5L, the lower support arm 14L and the lower linking member 16L move together with the ball nut 21L, causing the swinging arm 17L to swing so that the camber angle of the left wheel 5L changes. That is, a left wheel camber angle changing mechanism is constituted by the left linking mechanism 11L, the ball nut 21L, and the ball screw 22L.

When the ball screw 22R turns in response to the movement of camber angle changing actuator 23R for the right wheel 5R, the lower support arm 14R and the lower linking member 16R move together with the ball nut 21R, causing the other swinging arm 17R to swing so that the camber angle of the right wheel 5R changes. That is, a right wheel camber angle changing mechanism is constituted by the right linking mechanism 11R, the ball nut 21R, and the ball screw 22R.

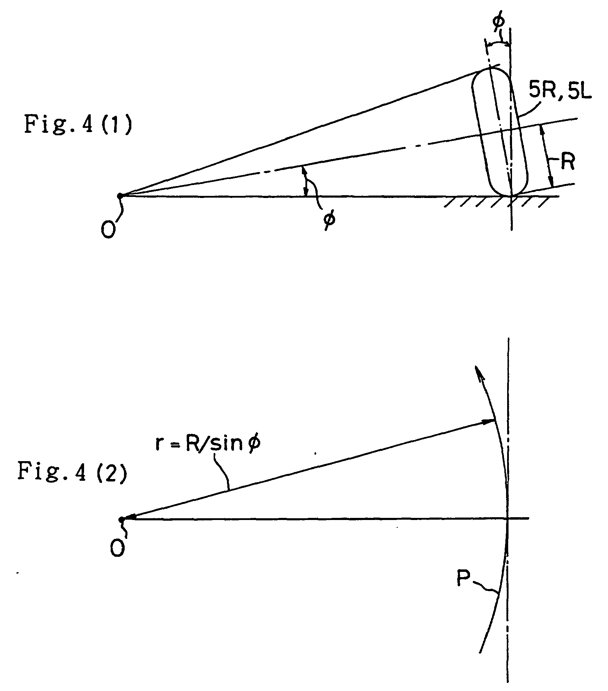

The steering angle of the vehicle is changed by the changes in the camber angles of the wheels 5L and 5R from the straight ahead travel values, so that the vehicle turns. Fig. 4 (1) diagrams a situation where the equatorial plane of the wheels 5L and 5R of radius R makes an angle of $\phi$ with the perpendicular plane due to a change in the camber angle, and in Fig. 4 (2) the turning track of the wheels 5L and 5R in that condition is indicated by the arrow P. It is assumed here that there is no slipping between the wheels 5L and 5R and the road surface, and that the turning track of the wheels 5L and 5R is circular about a center O. In this case, the turning radius r for the wheels 5L and 5R is given by $r = R/\sin\phi$. While, because of the fact that the turning radius r of left wheel 5L and the turning radius r of right wheel 5R differ from each other by the wheel interval between the left wheel 5L and the right wheel 5R, the amount of change in the camber angle from the straight ahead travel value in the left wheel 5L and the amount of change in the camber angle from the straight ahead travel value in the right wheel 5R are mutually different according to that wheel interval. Thus, in Fig. 1, for example, if the equatorial plane S of the left and right wheels 5L and 5R tilts from the straight ahead travel condition, so that the upper edge leans further to the left than the lower edge, then the camber angles change from the values when the vehicle is traveling straight ahead by $\theta L1$ and $\theta L2$ (where $\theta L1 > \theta L2$), whereupon the vehicle turns to the left. Similarly, if the equatorial plane S of the left and right wheels 5L and 5R tilts from the straight ahead travel condition, so that the upper edge leans further to the right than the lower edge, then the camber angles change from the values when the vehicle is traveling straight ahead, in Fig. 1, by $\theta R1$ and $\theta R2$ (where $\theta R1 < \theta R2$), whereupon the vehicle turns to the right.

Camber angle sensors 71L and 71R are provided for detecting the amounts of turning in the camber angle changing actuators 23L and 23R as values corresponding to the amounts of change in the camber angles of the wheels 5L and 5R from the straight ahead travel values.

As diagrammed in Fig. 5 (1), in a tire T that constitutes each of the left and the right wheel 5L and 5R, the radius of curvature R1 at the middle area of the tread is made larger than the radius of curvature R2 at the opposite ends thereof, and therefore, as diagrammed in Fig. 5 (2), the middle area of the tread, in the width dimension thereof, is made so that it contacts with the road surface even when the camber angle is at maximum, in order to obtain stable gripping force and prevent a decline in driving stability. This is unlike the case of a tire T for a conventional four wheel vehicle where, as diagrammed in Fig. 5 (3), the radius of curvature R is large across the entire width of the tread thereof, so that, when the camber angle becomes large, as diagrammed in Fig. 5 (4), the middle area of the tread in the width dimension separates from the road surface, and stable gripping force cannot be obtained. And in the case where the radius of curvature R' of the tread in a tire T for a conventional two wheel vehicle is small across the entire width thereof, as diagrammed in Fig. 5 (5), the middle area of the tread in the width dimension is made so that it contacts with the road surface even when the camber angle is large, as diagrammed in Fig. 5 (6), but the area of contact with the road surface during straight ahead travel becomes small so that driving stability declines.

As diagrammed in Fig. 2, a toeing angle changing actuator 41 for the left and right wheels 5L and 5R is attached to the axle shaft 10. This toeing angle changing actuator 41 can be constituted by an electric motor such as a brushless motor, for example. A toeing angle changing mechanism is provided for changing the toeing angle of the left and right wheels 5L and 5R in response to movements of the toeing angle changing actuator 41. This toeing angle changing mechanism has a motion conversion mechanism 43 for converting the turning motion of the toeing angle changing actuator 41 to linear motion of a steering rod 42, and tie rods 44L and 44R each of which is linked, at one end thereof, by a ball joint to the respective end of the steering rod 42 so as to be swingable. The other end of the one tie rod 44L is linked by a ball joint to one knuckle arm 19L so that it can swing, and the other end of the other tie rod 44R is linked by a ball joint to the other knuckle arm 19R so that it can swing. Thus the movements of the steering rod 42 in response to the movements of the toeing angle changing actuator 41 are transmitted through the tie rods 44L and 44R to the knuckle arms 19L and 19R, so that the knuckle arms 19L and 19R swing about king pins 18L and 18R, and the toeing angles of the wheels 5L and 5R are changed. The steering angle of the vehicle can be changed, so that the vehicle can turn, by the changes in the toeing angles of the wheels 5L and 5R from the straight ahead travel values.

A toeing angle sensor 73 is provided for detecting amounts of turn in the toeing angle changing actuator 41 as values that correspond to the amounts of change in the toeing angles of the wheels 5R and 5L from the straight ahead travel values.

The lower linking members 16L and 16R are linked to the vehicle body through shock absorbers 51L and 51R which constitute the suspension mechanism. Each of these shock absorbers 51L and 51R is to be a hydraulic type having a cylinder 51' linked by a ball joint on the vehicle body and a piston rod 51" linked by a ball joint on the lower linking members 16L, 16R. One of the two hydraulic chambers 51a and 51b divided by the piston inside each of the cylinders 51' is connected to a hydraulic fluid supply pump (not shown) through solenoid valves 54L, 54R, while the other hydraulic chamber is connected to a tank (not shown). Except when the steering angle is being changed, there is no intake or discharge of hydraulic fluid between the hydraulic chambers 51a, 51b and the outside, and therefore, the shock absorbers 51L and 51R perform ordinary shock absorbing functions. When the steering angle is being changed, the solenoid valves 54L and 54R are controlled by a control device 81 (described subsequently) so that hydraulic fluid is supplied to one of the hydraulic chambers 51a and 51b while the other thereof communicates with the tank; and therefore, one of the two shock absorbers 51L and 51R that is positioned adjacent to the outside wheel of the turning vehicle extends, while the other that is positioned adjacent to the inside wheel contracts. Because of this, when the steering angle is being changed by a left steering operation, for example, and a force acts on the vehicle body in a rolling direction as indicated by arrow A in Fig. 1 due to centrifugal force, a force can be made to act on the vehicle body in the opposite direction to the direction of the roll force, as indicated by arrow B.

Displacement sensors 53L and 53R are provided for detecting displacements in the rods 51" relative to the cylinders 51' of the shock absorbers 51L and 51R. From the displacements detected by these displacement sensors 53L and 53R and the turning angle detected by the axle shaft turning angle sensor 72, displacements in the wheels 5L and 5R associated with irregularities in the road surface can be found. The camber angle changing actuators 23L and 23R are controlled by the control device 81 so that the camber angles change in response to the displacements in the wheels 5L and 5R associated with the irregularities in the road surface.

The steering wheel 1 is linked to a turning shaft 61 that is supported rotatably by the vehicle body. A restraining force actuator 62 is provided for generating operation restraining force for steering wheel 1. That restraining force actuator 62 can be constituted by a brushless motor or other electric motor having an output shaft that is made integral with the turning shaft 61. An elastic member 63 is provided for applying an elastic force to restore the steering wheel 1 to the straight ahead steering position. This elastic member 63 can be constituted by a coil spring that applies an elastic force to the turning shaft 61, for example. When the restraining force actuator 62 is not subjecting the turning shaft 61 to a torque, the steering wheel 1 can be restored to the straight ahead steering position by that elastic force.

An angle sensor 64 is provided for detecting, as a steering input, turning angles in the turning shaft 61 which are operating amounts of steering wheel 1. And a torque sensor 65 is provided for detecting operating torques transmitted by that turning shaft 61 as values corresponding to the operation restraining force for the steering wheel 1.

The camber angle changing actuators 23L and 23R, camber angle sensors 71L and 71R, axle shaft turning angle changing actuator 34, axle shaft turning angle sensor 72, toeing angle changing actuator 41, toeing angle sensor 73, displacement sensors 53L and 53R, solenoid valves 54L and 54R, restraining force actuator 62, angle sensor 64, and torque sensor 65 are connected to the control device 81. A vehicle speed sensor 66 is also connected to the control device 81.

The control device 81 controls the camber angle changing actuators 23L and 23R, the axle shaft turning angle changing actuator 34, and the toeing angle changing actuator 41, in response to the steering inputs, that is, the operating amounts of steering wheel 1 detected by the angle sensor 64, and to the vehicle speed detected by the vehicle speed sensor 66. Thus, in response to the steering inputs, the camber angles of the wheels 5L and 5R, the turning angle of the axle shaft 10, and the toeing angles of the wheels 5L and 5R change, and the vehicle is steered in response to the amount of change in the camber angle of the left wheel 5L from the straight ahead travel value, the amount of change in the camber angle of the right wheel 5R from the straight ahead travel value, the amount of change in the axle shaft turning angle from the straight ahead travel value, and the amount of change in the toeing angle from the straight ahead travel value.

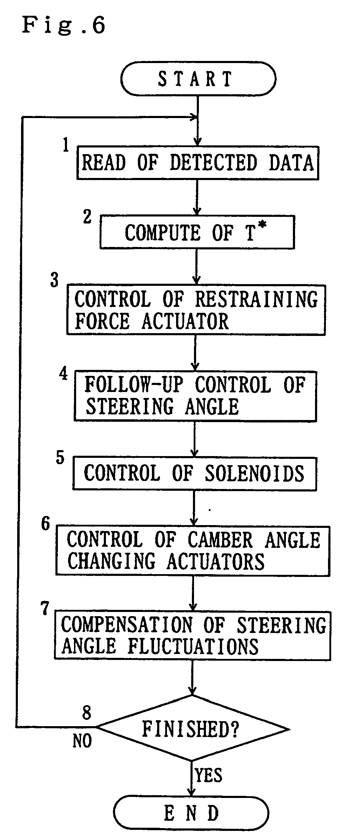

The control procedures performed by the control device 81 are described with reference to the flow chart given in Fig. 6. First, detected data are read from the sensors 53L, 53R, 64, 65, 71L, 71R, 72, and 73 (step 1).

Next, a target control torque $T^*$ is computed as the operation restraining force (step 2). For that purpose, the control device 81 computes a designated steering angle $\delta^*$ that corresponds to the operating $\delta h$ of the steering wheel 1 detected by the angle sensor 64. The correspondence relationship between this designated steering angle $\delta^*$ and operating angle $\delta h$ of the steering wheel 1 is predetermined and stored in the memory of the control device 81. An actual steering angle $\delta$ is computed from the camber angles of the wheels 5L and 5R detected by the camber angle sensors 71L and 71R, the turning angle of the axle shaft 10 detected by the axle shaft turning angle sensor 72, and the toeing angles of the wheels 5L and 5R detected by the toeing angle sensor 73. The relationships between the camber angles of the wheels 5L and 5R, the turning angle of the axle shaft 10, the toeing angles of the wheels 5L and 5R, and the actual steering angle δ are predetermined and stored in the memory of the control device 81. The actual steering angle δ is subtracted from the designated steering angle δ * to compute the steering angle differential (δ * - δ). For the target control torque T*, the operation restraining force containing a restraining force component Th* corresponding to operating angle δ h of the steering wheel 1 and a restraining force component ΔT corresponding to the steering angle differential (δ * - δ) is computed. In this embodiment, that target control torque T* is computed by the formula given below, where Ka and Kb are constants of proportionality.

$$T^* = Th^* + \Delta T = Ka \cdot \delta h + Kb \cdot (\delta^* - \delta)$$

Next, the restraining force actuator 62 is controlled so that it generates the target control torque T* that is the operation restraining force computed in step 2 (step 3). That is, the control device 81 controls the restraining force actuator 62 so that the differential resulting from subtracting the operating torque T detected by the torque sensor 65 from that target control torque T* becomes zero.

Next, follow-up control of steering angle is performed to make the actual steering angle follow the designated steering angle δ * that is the target value by controlling the camber angle changing actuators 23L and 23R, the axial shaft turning angle changing actuator 34 and the toeing angle changing actuator 41 (step 4). In this embodiment, that designated steering angle δ * is made to be a function K2 of the vehicle speed detected by the vehicle speed detector 66 and the operating angle δ h that is the operating amounts of steering wheel 1, and that function K2 is predetermined and stored in the memory of the control device 81. The control device 81 controls the camber angle changing actuators 23L and 23R, the axle shaft turning angle changing actuator 34, and the toeing angle changing actuator 41 so that the steering angle differential (δ * - δ) obtained by subtracting the actual steering angle δ from the designated steering angle δ *, which is determined according to the vehicle speed detected by the sensor 66 and the detected operating angle δ h based on that relationship, becomes zero. Thus the steering angle changes in response to the steering inputs and the vehicle is steered.

Provision can also be made so that the designated steering angle δ * is made a function of the detected operating torque T, and the designated steering angle δ * is determined from this detected operating torque T.

Next, in order to cause a force to act on the vehicle body in a direction opposite to the direction of roll acting on the vehicle due to centrifugal force during a steering angle change, the solenoid valves 54L and 54R are controlled so that one of the shock absorbers 51L and 51R that is positioned adjacent to the outside wheel of the turning vehicle extends, and so that the other that is positioned adjacent to the inside wheel contracts (step 5). The control amounts for the solenoid valves 54L and 54R corresponding to the size of the forces acting on the vehicle body are made a function of the vehicle speed and the steering angle differential (δ * - δ), for example, determined beforehand, and stored in the memory of the control device 81.

Next, the displacements in the wheels 5L and 5R associated with irregularities in the road surface are computed from the displacements in the rods 51" relative to the cylinders 51' in the shock absorbers 51L and 51R detected by the displacement sensors 53L and 53R, and from the turning angle of axle shaft 10 detected by the axle shaft turning angle sensor 72, and then the camber angle changing actuators 23L and 23R are controlled so that the camber angles change in response to those displacements and so that the wheels 5L and 5R follow the irregularities in the road surface (step 6). The computation formula for the displacements in the wheels 5L and 5R and the computation formula for the amount of change in the camber angles in accordance with those displacements are predetermined and stored in the memory of the control device 81. When this is done, in order that the steering angle is not changed by changes in the camber angles in response to the displacements in the wheels 5L and 5R, the toeing angle changing actuator 41 and axle shaft turning angle changing actuator 34 are controlled according to the changes in the camber angles, the toeing angles of the wheels 5L and 5R and the turning angle of the axle shaft 10 are changed, and fluctuations in steering angle are compensated for (step 7).

After that has been done, a determination is made as to whether to end this control or not, based on whether or not the engine ignition switch is turned on or off, for example (step 8), and if it is not to be stopped then step 1 is returned to.

According to the above described constitution, the steering angle can be altered by changing the camber angles of the left and right wheels 5L and 5R from their straight ahead travel values by steering inputs, and causing the amount of change in the camber angle of the left wheel 5L from the straight ahead travel value and the amount of change in the camber angle of the right wheel 5R from the straight ahead travel value to be mutually different. Because the amount of change in the camber angle required for a certain change in the steering angle can be made smaller than the amount of toeing angle change, the responsiveness of steering angle changes to steering inputs can be made quicker. The camber angle of the left wheel 5L and the camber angle of the right wheel 5R can be changed separately, therefore the amount of change in the camber angle of the left wheel 5L from the straight ahead travel value and the amount of change in the camber angle of the right wheel 5R from the straight ahead travel value can easily be set to values that correspond to steering inputs. Furthermore, because the vehicle is steered not only by changing the camber angles of the left and right wheels 5L and 5R from the straight ahead travel values, but also by changing the axle shaft turning angle and toeing angle from the straight ahead travel values by steering inputs, the discrepancy between the center of vehicle turning during a steering operation and the center of turning of the left and right wheels 5L and 5R can be made small, and slipping of the left and right wheels 5L and 5R caused by the discrepancy is reduced, whereby steering resistance can be reduced. The wheels 5L and 5R are also rapidly displaced by changes in the camber angles in response to road surface irregularities, so suspension performance can be enhanced. And roll direction forces during steering changes can be cancelled out, erratic vehicle behavior prevented, and driving stability improved.

In the above described embodiment, for example, the vehicle is steered in response to changes in the toeing angles and axle shaft turning angle as well as by changes in the camber angles of the left and right wheels 5L and 5R, but the vehicle can instead be steered in response only to the amounts of change in the camber angles of the left and right wheels from their straight ahead travel values. Also, steering angle fluctuations caused by changes in the camber angles in response to wheel displacement in order to make the wheels follow irregularities in the road surface can be compensated for by controlling only one or other of the axle shaft turning angle changing actuator and toeing angle changing actuator. In the above described embodiment, moreover, the operating member is manually operated by a driver, but the camber angle changing actuators, axle shaft turning angle changing actuator, and toeing angle changing actuator can be controlled in response to steering inputs from an automatic steering device.

**Claims**

1.  A vehicle steering apparatus comprising:

    a camber angle changing actuator (23L) for the left wheel (5L) and a camber angle changing actuator (23R) for the right wheel (5R);
    a left wheel camber angle changing mechanism for changing camber angle of said left wheel (5L) in response to movements of said left wheel camber angle changing actuator (23L) and a right wheel camber angle changing mechanism for changing camber angle of said right wheel (5R) in response to movements of said right wheel camber angle changing actuator (23R), wherein the amount of change in left wheel (5L) camber angle from straight ahead travel value and amount of change in right wheel (5R) camber angle from straight ahead travel value are caused to be mutually different; and
    a control device (81) for controlling said camber angle actuators (23L, 23R) in response to the steering input; wherein
    a vehicle is steered in response to an amount of change in camber angle of said left wheel (5L) and to an amount of change in camber angle of said right wheel (5R);

    **characterized by** further comprising:

    an axle shaft (10) being linked to a vehicle body so as to be turnable about a vertically orientated axis, wherein said left wheel (5L) is linked to one end of said axle shaft (10) and said right wheel (5R) is linked to another end thereof;
    an axle shaft turning angle changing actuator (34);
    an axle shaft turning angle changing mechanism for changing axle shaft turning angle in response to movements of said axle shaft turning angle changing actuator (34);
    a toeing angle changing actuator (41) for said left and right wheels (5L, 5R);
    a toeing angle changing mechanism for changing toeing angles of said left and right wheels (5L, 5R) in response to movements of said toeing angle changing actuator (41);

    wherein said control device (81) controls, in addition to said camber angle actuators (23L, 23R), said axle shaft turning angle changing actuator (34) and said toeing angle changing actuator (41) in response to the steering input; wherein
    said vehicle is steered in response to amounts of change in said axle shaft turning angle from straight ahead travel value and amounts of change in said toeing angles from straight ahead travel values in addition to an amount of change in camber angle of said left wheel (5L) and to an amount of change in camber angle of said right wheel (5R).

2.  The vehicle steering apparatus according to claim 1, wherein
    means (53L, 53R, 72) for detecting displacements in said wheels (5L, 5R) associated with irregularities in road surfaces are provided,

said camber angle changing actuators (23L, 23R) are controlled so that said camber angles change in response to the displacements in said wheels (5L, 5R), and

at least one or other of said axle shaft turning angle changing actuator (34) and said toeing angle changing actuator (41) is controlled so as to compensate steering angle fluctuations caused by camber angles changes in response to the displacements in said wheels (5L, 5R).

3. The vehicle steering apparatus according to claim 1 or 2, comprising means for causing a force to act on said vehicle body in a direction opposite to the direction of roll force acting on said vehicle body during steering angle changes.

4. The vehicle steering apparatus according to any of the claims 1 to 3, wherein radius of curvature is made wider at the middle area of tire tread than at the opposite ends thereof in said wheels (5L, 5R).

**Patentansprüche**

1. Fahrzeug-Lenkvorrichtung, die folgendes aufweist:

ein Sturzwinkel-Änderungsstellglied (23L) für das linke Rad (5L) und ein Sturzwinkel-Änderungsstellglied (23R) für das rechte Rad (5R);

einen Sturzwinkel-Änderungsmechanismus für das linke Rad zum Ändern eines Sturzwinkels des linken Rads (5L) in Reaktion auf Bewegungen des Sturzwinkel-Änderungsstellglieds (23L) für das linke Rad und einen Sturzwinkel-Änderungsmechanismus für das rechte Rad zum Ändern eines Sturzwinkels des rechten Rads (5R) in Reaktion auf Bewegungen des Sturzwinkel-Änderungsstellglieds (23R) für das rechte Rad, wobei veranlasst wird, dass das Änderungsausmaß bezüglich des Sturzwinkels für das linke Rad (5L) von einem Wert für ein Geradeausfahren und das Änderungsausmaß bezüglich eines Sturzwinkels für das rechte Rad (5R) von einem Wert für ein Geradeausfahren wechselseitig unterschiedlich ist; und

eine Steuervorrichtung (81) zum Steuern der Sturzwinkel-Stellglieder (23L, 23R) in Reaktion auf die Lenkeingabe; wobei

ein Fahrzeug in Reaktion auf ein Änderungsausmaß bezüglich eines Sturzwinkels des linken Rads (5L) und ein Änderungsausmaß bezüglich eines Sturzwinkels des rechten Rads (5R) gelenkt wird;

**dadurch gekennzeichnet, dass** sie weiterhin folgendes aufweist:

eine Achswelle (10), die mit einer Fahrzeugkarosserie derart verbunden ist, dass sie um eine vertikal ausgerichtete Achse drehbar ist, wobei das linke Rad (5L) mit einem Ende der Achswelle (10) verbunden ist und das rechte Rad (5R) mit ihrem anderen Ende verbunden ist;

ein Achswellen-Drehwinkeländerungsstellglied (34);

einen Achswellen-Drehwinkeländerungsmechanismus zum Ändern eines Achswellen-Drehwinkels in Reaktion auf Bewegungen des Achswellen-Drehwinkeländerungsstellglieds (34);

ein Vorspurwinkel-Änderungsstellglied (41) für das linke und das rechte Rad (5L, 5R);

einen Vorspurwinkel-Änderungsmechanismus zum Ändern von Vorspurwinkeln des linken und des rechten Rads (5L, 5R) in Reaktion auf Bewegungen des Vorspurwinkel-Änderungsstellglieds (41);

wobei die Steuervorrichtung (81), zusätzlich zu den Sturzwinkel-Stellgliedern (23L, 23R), das Achswellen-Drehwinkeländerungsstellglied (34) und das Vorspurwinkel-Änderungsstellglied (41) in Reaktion auf die Lenkeingabe steuert; wobei

das Fahrzeug in Reaktion auf Änderungsausmaße bezüglich des Achswellen-Drehwinkels von einem Wert für ein Geradeausfahren und Änderungsausmaße bezüglich Vorspurwinkel von Werten für ein Geradeausfahren zusätzlich zu einem Änderungsausmaß bezüglich eines Sturzwinkels des linken Rads (5L) und zu einem Änderungsausmaß bezüglich eines Sturzwinkels des rechten Rads (5R) gelenkt wird.

2. Fahrzeug-Lenkvorrichtung nach Anspruch 1, wobei
Einrichtungen (53L, 53R, 72) zum Erfassen von zu Unregelmäßigkeiten bezüglich Straßenflächen gehörenden Versätzen bezüglich der Räder (5L, 5R) vorgesehen sind,

die Sturzwinkel-Änderungsstellglieder (23L, 23R) so gesteuert werden, dass sich die Sturzwinkel in Reaktion auf die Versätze bezüglich der Räder (5L, 5R) ändern, und

wenigstens eines oder ein anderes des Achswellen-Drehwinkeländerungsstellglieds (34) und des Vorspurwinkel-Änderungsstellglieds (41) so gesteuert wird, um durch Sturzwinkeländerungen in Reaktion auf die Versätze bezüglich der Räder (5L, 5R) verursachte Lenkwinkelschwankungen zu kompensieren.

3. Fahrzeug-Lenkvorrichtung nach Anspruch 1 oder 2, die eine Einrichtung aufweist, um zu veranlassen, dass eine Kraft auf die Fahrzeugkarosserie in einer Richtung entgegengesetzt zur Richtung einer Wankkraft wirkt, die während Lenkwinkeländerungen auf die Fahrzeugkarosserie wirkt.

4. Fahrzeug-Lenkvorrichtung nach einem der Ansprüche 1 bis 3, wobei veranlasst ist, dass ein Krümmungsradius im mittleren Bereich einer Reifenlauffläche breiter als an ihren gegenüberliegenden Enden an den Rädern (5L, 5R) ist.

**Revendications**

1. Appareil de direction de véhicule comprenant :

   un actionneur de changement de l'angle de carrossage (23L) pour la roue gauche (5L) et un actionneur de changement de l'angle de carrossage (23R) pour la roue droite (5R) ;
   un mécanisme de changement de l'angle de carrossage de la roue gauche pour changer l'angle de carrossage de ladite roue gauche (5L) en réponse à des mouvements dudit actionneur de changement de l'angle de carrossage de la roue gauche (23L) et un mécanisme de changement de l'angle de carrossage de la roue droite pour changer l'angle de carrossage de ladite roue droite (5R) en réponse à des mouvements dudit actionneur de changement de l'angle de carrossage de la roue droite (23R), dans lequel il est fait en sorte que la quantité de changement de l'angle de carrossage de la roue gauche (5L) par rapport à une valeur de course rectiligne et la quantité de changement de l'angle de carrossage de la roue droite (5R) par rapport à une valeur de course rectiligne soient mutuellement différentes ; et
   un dispositif de commande (81) pour commander lesdits actionneurs d'angle de carrossage (23L, 23R) en réponse à l'entrée de direction ; dans lequel :

      un véhicule est dirigé en réponse à une quantité de changement de l'angle de carrossage de ladite roue gauche (5L) et à une quantité de changement de l'angle de carrossage de ladite roue droite (5R);

   **caractérisé en ce qu'**il comprend en outre :

      un arbre de roue (10) étant relié à une carrosserie de véhicule de manière à pouvoir tourner autour d'un axe orienté de manière verticale, dans lequel ladite roue gauche (5L) est reliée à une extrémité dudit arbre de roue (10), et ladite roue droite (5R) est reliée à une autre extrémité de celui-ci ;
      un actionneur de changement de l'angle de rotation de l'arbre de roue (34) ;
      un mécanisme de changement de l'angle de rotation de l'arbre de roue pour changer l'angle de rotation de l'arbre de roue en réponse à des mouvements dudit actionneur de changement de l'angle de rotation de l'arbre de roue (34) ;
      un actionneur de changement de l'angle de parallélisme (41) pour lesdites roues gauche et droite (5L, 5R) ;
      un mécanisme de changement de l'angle de parallélisme pour changer les angles de parallélisme desdites roues gauche et droite (5L, 5R) en réponse à des mouvements dudit actionneur de changement de l'angle de parallélisme (41) ;

   dans lequel ledit dispositif de commande (81) controle, en plus desdits actionneurs d'angle de carrossage (23L, 23R), ledit actionneur de changement de l'angle de rotation de l'arbre de roue (34) et ledit actionneur de changement de l'angle de parallélisme (41) en réponse à l'entrée de direction ; dans lequel
   ledit véhicule est dirigé en réponse à des quantités de changement dudit angle de rotation de l'arbre de roue par rapport à une valeur de course rectiligne et à des quantités de changement desdits angles de parallélisme par rapport à des valeurs de course rectiligne, en plus d'une quantité de changement de l'angle de carrossage de ladite roue gauche (5L) et d'une quantité de changement de l'angle de carrossage de ladite roue droite (5R).

2. Appareil de direction de véhicule selon la revendication 1, dans lequel
   sont prévus des moyens (53L, 53R, 72) pour détecter des déplacements desdites roues (5L, 5R) associés à des irrégularités de la surface de la route,
   lesdits actionneurs de changement de l'angle de carrossage (23L, 23R) sont commandés de sorte que lesdits angles de carrossage changent en réponse aux déplacements desdites roues (5L, 5R), et
   au moins l'un ou l'autre dudit actionneur de changement de l'angle de rotation de l'arbre de roue (34) et dudit actionneur de changement de l'angle de parallélisme (41) est commandé de manière à compenser les fluctuations d'angle de braquage causées par les changements d'angle de carrossage en réponse aux déplacements desdites roues (5L, 5R).

3. Appareil de direction de véhicule selon la revendication 1 ou 2, comprenant des moyens pour faire en sorte qu'une force agisse sur ladite carrosserie de véhicule dans une direction opposée à la direction de roulis agissant sur ladite carrosserie de véhicule lors des changements d'angle de braquage.

4. Appareil de direction de véhicule selon l'une quelconque des revendications 1 à 3, dans lequel le rayon de courbure est rendu plus large au niveau de la zone centrale de la bande de roulement qu'aux extrémités opposées de celle-ci dans lesdites roues (5L, 5R).

Fig.1

Fig.2

EP 1 078 844 B1

Fig.3

5L

31

5R

Fig. 4 (1)

5R, 5L

R

φ

O

φ

Fig. 4 (2)

$r = R/\sin \phi$

O

P

Fig. 5 (1)          Fig. 5 (2)

Fig. 5 (3)          Fig. 5 (4)

Fig. 5 (5)          Fig. 5 (6)

Fig.6

START

1 READ OF DETECTED DATA

2 COMPUTE OF T*

3 CONTROL OF RESTRAINING FORCE ACTUATOR

4 FOLLOW-UP CONTROL OF STEERING ANGLE

5 CONTROL OF SOLENOIDS

6 CONTROL OF CAMBER ANGLE CHANGING ACTUATORS

7 COMPENSATION OF STEERING ANGLE FLUCTUATIONS

8 FINISHED?

NO

YES

END